# EUROPEAN PATENT APPLICATION

(11) **EP 3 982 332 A1**
(43) Date of publication of application: **13.04.2022**
(21) Application number: 21198595.7
(22) Date of filing: 23.09.2021
(51) Int. Cl.: G06V 10/82, G06V 20/56

(54) **METHODS AND SYSTEMS FOR GENERATING TRAINING DATA FOR HORIZON AND ROAD PLANE DETECTION**

(30) Priority: 06.10.2020 RU 2020132871
(71) Applicant: YANDEX SELF DRIVING GROUP LLC, Moscow, Skolkovo 121205 (RU)
(72) Inventor: POSTNIKOV, Mikhail Mikhailovich, 108817 Moscow (RU); ORLOV, Vsevolod Nikolaevich, 140181 Zhukovskiy (RU)
(74) Representative: Murgitroyd & Company

(57) **Abstract**

A method and system (100) for generating a training dataset for a machine learning algorithm for producing a machine learning model for use in a self-driving vehicle (200) to predict a plane of a road based on an image (406) are provided. The method includes receiving an image (406) taken during operation of a training vehicle, determining a line (510) in the image representing the road plane in the image based on additional sensor data from the training vehicle, labeling the image (406) with the line (510) to generate a training example, and adding the training example to the training dataset. A method of operating a self-driving vehicle (200) using a machine learning algorithm trained using such a generated training dataset and a self-driving vehicle (200) are also disclosed.

## Description

### FIELD OF TECHNOLOGY

The present technology relates to computer-implemented methods and systems for machine learning, and more specifically, to methods and systems for generating training data for use in training a machine learning system to detect a horizon and/or a road plane in a self-driving vehicle.

### BACKGROUND

One problem associated with properly operating a self-driving vehicle is correctly determining a plane of the road in front of the self-driving vehicle. Most of the algorithms that are utilized for self-driving vehicle operation perform calculations based on a birds-eye view projection of a road scene. An incorrectly defined plane of the road may result in a distorted representation of the road in the birds-eye view projection. This may result in "unnatural" motion of the self-driving vehicle, which is being driven by algorithms that perform calculations and control the vehicle based on this distorted birds-eye view projection.

One conventional approach to solving this problem utilizes a LiDAR (Light Detection and Ranging) system on the self-driving vehicle for determining the plane of the road within the range of the LiDAR (e.g., approximately 100m). Based on a set of LiDAR points, the method determines a subset of points belonging to the road surface. Based on the determined road surface, the method determines the plane of the road within the range of the LiDAR.

While LiDAR systems are currently common on self-driving vehicles, not all self-driving vehicles are equipped with a LiDAR system. It may, therefore, be desirable to provide alternatives to LiDAR for determining a road plane, so that a single road plane and horizon line determination system may be used on self-driving vehicles both with and without a LIDAR system.

One possible alternative is to use camera images, rather than LiDAR, to determine a plane of the road. Cameras are much less expensive and much easier to service than are LiDAR systems. Cameras, however, provide only a two-dimensional image, without the depth information that a LiDAR system provides, requiring more computationally sophisticated approaches to determining the plane of the road.

### SUMMARY

To overcome the difficulties of using a LiDAR system or other expensive and complex sensor technology to determine the plane of the road, the developers of the present technology use images provided by a camera to determine a road plane. This is achieved by training a machine learning algorithm to predict the plane of the road based on camera images. However, training the machine learning algorithm to reliably predict a plane of a road based on an image requires use of a large training dataset.

A "naive" approach for creating the training dataset is to manually label camera images with a horizon line. The position of a horizon line unambiguously represents the plane of the road, as all the planes parallel to the road converge at infinity to the horizon line. However, determining a position of the horizon line is not always possible based only on the image. For example, the horizon line in the image can be partially or totally hidden by trees or other objects. Additionally, manually generating large datasets for training machine learning algorithms is an extremely costly and time-consuming process.

Accordingly, the present technology provides an alternative to using manually-labeled horizon lines in images for training machine learning algorithms to determine a plane of a road based on images. In particular, the present technology uses an automated approach to generating large training datasets for training a machine learning algorithm to predict a road plane based on an image. The technology then uses the machine learning algorithms that have been trained using these datasets to operate a self-driving vehicle. Accordingly, the present technology effectively improves the operation of self-driving or semi-autonomous vehicles.

In accordance with one aspect of the present disclosure, the technology is implemented in a method for producing a machine learning model for use in a self-driving vehicle to predict a plane of a road based on an image. The method includes generating a training dataset on a computing device by receiving data collected from operation of a training vehicle on a road, the data including an image associated with a first location of the training vehicle on the road, and odometry data associated with a second location of the training vehicle on the road. The image shows a portion of the road associated with the second location of the training vehicle. Generating the training dataset further includes determining a road plane at the second location of the training vehicle based on the odometry data, determining a line in the image representing the road plane at the second location of the training vehicle, labeling the image with the line to generate a training example, and adding the training example to the training dataset. The method further includes providing the training dataset to a machine learning algorithm operating on the computing device to generate a machine learning model for use in the self-driving vehicle, and determining a new road plane based on a new incoming camera image using the machine learning model.

In some implementations, the training vehicle is operated at the first location during a first instant in time, and at the second location during a second instant in time that is later than the first instant in time. In some implementations, the second location is ahead of the first location along an operating path of the training vehicle on the road, and there is a predetermined distance between the first location and the second location.

In some implementations, the odometry data is based on LiDAR data of the second location. In certain of these implementations, the LiDAR data are sparse.

In some implementations, the line is determined based on a set of image points. At least two image points in the set of image points correspond to positions along one of a rear axle or a front axle of the training vehicle at the second location.

In some implementations, the machine learning algorithm comprises a convolutional neural network, and the machine learning model defines the convolutional neural network. In some implementations, labeling the image with the line comprises marking the line on the image.

In accordance with other aspects of the present disclosure, a method of operating a self-driving vehicle is provided. The method includes taking an image from a first location of the self-driving vehicle using an electronic camera. The image shows a portion of a road on which the self-driving vehicle is operating, including a second location that is ahead of the first location on the road. The method further includes providing the image to a machine learning model operating on a computing device, the machine learning model determining an estimated road plane based on the image, and using the estimated road plane to operate the self-driving vehicle on the road. The machine learning model was trained using a training dataset generated, at least in part, by receiving data collected from operation of a training vehicle on a training road. The data includes a training image associated with a first location of the training vehicle on the training road, and training odometry data associated with a second location of the training vehicle on the training road. The training image shows a portion of the training road associated with the second location of the training vehicle. The machine learning model was further trained by determining a training road plane at the second location of the training vehicle based on the training odometry data, determining a line in the image representing the training road plane at the second location of the training vehicle, labeling the image with the line to generate a training example, and adding the training example to the training dataset.

In accordance with a further aspect of the present disclosure, the technology is implemented in a self-driving vehicle. The self-driving vehicle includes an electronic camera configured to take an image from a first location of the self-driving vehicle, showing a portion of a road on which the self-driving vehicle is operating, including a second location that is ahead of the first location on the road. The self-driving vehicle further includes a computing device including a processor and a memory, the memory storing programmed instructions that when executed by the processor cause the computing device to: provide the image to a machine learning model stored in the memory and operating on the computing device, the machine learning model determining an estimated road plane based on the image; and operate the self-driving vehicle on the road, based at least in part on the estimated road plane. The machine learning model comprises values stored in the memory that were determined by a machine learning algorithm using a training dataset generated, at least in part, by receiving data collected from operation of a training vehicle on a training road, the data including a training image associated with a first location of the training vehicle on the training road, and training odometry data associated with a second location of the training vehicle on the training road. The training image shows a portion of the training road associated with the second location of the training vehicle. Generating the training dataset was further generated by determining a training road plane at the second location of the training vehicle based on the training odometry data, determining a line in the image representing the training road plane at the second location of the training vehicle, labeling the image with the line to generate a training example, and adding the training example to the training dataset.

In accordance with another aspect of the present disclosure, the technology is implemented in a method for producing a machine learning model for use in navigating a self-driving vehicle to determine a road plane based on an image. The method includes generating a training dataset on a computing device by receiving surface data from a first sensor mounted on a training vehicle, the surface data associated with a segment of a surrounding environment including a training road within a predetermined distance from the training vehicle. Generating the training dataset further includes receiving a training image from a camera mounted on the training vehicle, the training image being associated with a first position of the training vehicle on the training road, the image comprising the segment of the surrounding environment including the training road. Generating the training dataset also includes determining a predicted future plane of the training road based on the surface data, determining a line representing the predicted future plane of the training road on the training image, labeling the training image with the line to generate a training example, and adding the training example to the training dataset. The method further includes providing the training dataset to a machine learning algorithm operating on the computing device to generate a machine learning model for use in the self-driving vehicle, and determining a new road plane based on a new incoming camera image using the machine learning model.

In some implementations according to this aspect of the disclosure, determining the predicted future plane of the training road comprises determining an averaged plane of the training road from the first position of the training vehicle to the predetermined distance from the training vehicle. In some implementations, the first sensor is a LiDAR sensor, and the surface data received from the first sensor is a set of LiDAR data points wherein a subset of the set of LiDAR data points belong to a surface of the training road. In some of these implementations, determining the predicted future plane of the training road includes using a random sample consensus algorithm on the set of LiDAR data points.

In some implementations, determining the line includes basing the line on a set of image points. At least two image points in the set of image points correspond to a point substantially belonging to the predicted future plane of the training road and located at the predetermined distance from the training vehicle.

In some implementations, the machine learning algorithm comprises a convolutional neural network. In some implementations, the machine learning model generates a set of parameters that unambiguously represent a predicted averaged plane of a new road within the predetermined distance. In some implementations, labeling the image with the line comprises drawing the line on the image.

In accordance with yet another aspect of the disclosure, the technology is implemented in a method of operating a self-driving vehicle. The method includes taking an image from a first location of the self-driving vehicle using a camera, the image showing a portion of a road on which the self-driving vehicle is operating, including a segment of a surrounding environment including the road within a predetermined distance from the self-driving vehicle. The method further includes providing the image to a machine learning model operating on a computing device, the machine learning model determining an estimated road plane based on the image, and using the estimated road plane to navigate the self-driving vehicle on the road. The machine learning model was trained using a training dataset generated, at least in part, by receiving surface data from a first sensor mounted on a training vehicle, the surface data associated with a training segment of a surrounding environment including a training road within the predetermined distance from the training vehicle. Training the machine learning model further included receiving a training image from a training camera mounted on the training vehicle, the training image being associated with a first position of the training vehicle on the training road, the training image comprising the training segment of the surrounding environment including the training road. Training the machine learning model also included determining a predicted future plane of the training road based on the surface data, determining a line representing the predicted future plane of the training road on the training image, labeling the training image with the line to generate a training example, and adding the training example to the training dataset.

In accordance with still another aspect of the disclosure, the technology is implemented in a self-driving vehicle. The self-driving vehicle includes an electronic camera configured to take an image from a first location of the self-driving vehicle using a camera, the image showing a portion of a road on which the self-driving vehicle is operating, including a segment of a surrounding environment including the road within a predetermined distance from the self-driving vehicle. The self-driving vehicle further includes a computing device including a processor and a memory, the memory storing programmed instructions that when executed by the processor cause the computing device to: provide the image to a machine learning model stored in the memory and operating on the computing device, the machine learning model determining an estimated road plane based on the image; and navigate the self-driving vehicle on the road, based at least in part on the estimated road plane. The machine learning model includes values stored in the memory that were determined by a machine learning algorithm using a training dataset generated, at least in part, by: receiving surface data from a first sensor mounted on a training vehicle, the surface data associated with a training segment of a surrounding environment including a training road within the predetermined distance from the training vehicle; receiving a training image from a training camera mounted on the training vehicle, the training image being associated with a first position of the training vehicle on the training road, the training image comprising the training segment of the surrounding environment including the training road; determining a predicted future plane of the training road based on the surface data; determining a line representing the predicted future plane of the training road on the training image; labeling the training image with the line to generate a training example; and adding the training example to the training dataset.

Additional and/or alternative features, aspects and advantages of implementations of the present technology will become apparent from the following description, the accompanying drawings and the appended claims.

### BRIEF DESCRIPTION OF THE DRAWINGS

These and other features, aspects and advantages of the present technology will become better understood with regard to the following description, appended claims and accompanying drawings where:
FIG. 1 depicts a schematic diagram of an example computer system for implementing certain embodiments of systems and/or methods of the present technology.
FIG. 2 depicts a self-driving vehicle suitable for use with some implementations of the present technology.
FIG. 3 is a flowchart of a method for producing a machine learning model for use in a self-driving vehicle to predict a plane of a road based on an image, in accordance with some implementations of the present technology.
FIG. 4 is an image illustrating a method of generating a training dataset, in accordance with some implementations of the present technology.
FIG. 5 is an annotated depiction of an image used in generating the training dataset, in accordance with some implementations of the present technology.
FIG. 6 shows a flowchart a method for generating a training dataset for a machine learning model for use in a self-driving vehicle to predict a plane of a road based on an image, in accordance with some implementations of the present technology.
FIG. 7 shows an annotated image taken by a camera on a training vehicle to illustrate a second method for generating a training dataset in accordance with some implementations of the present technology.
FIG. 8 shows a flowchart of the second method for generating a training dataset for a machine learning model for use in a self-driving vehicle to predict a plane of a road based on an image, in accordance with some implementations of the present technology.
FIG. 9 shows a flowchart of a method for operating a self-driving vehicle, in accordance with some implementations of the present technology.

### DETAILED DESCRIPTION

Various representative embodiments of the disclosed technology will be described more fully hereinafter with reference to the accompanying drawings. The present technology may, however, be embodied in many different forms and should not be construed as limited to the representative embodiments set forth herein. In the drawings, the sizes and relative sizes of layers and regions may be exaggerated for clarity. Like numerals refer to like elements throughout.

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

It will be understood that, although the terms first, second, third, etc. may be used herein to describe various elements, these elements should not be limited by these terms. These terms are used to distinguish one element from another. Thus, a first element discussed below could be termed a second element without departing from the teachings of the present disclosure. As used herein, the term "and/or" includes any and all combinations of one or more of the associated listed items.

It will be understood that when an element is referred to as being "connected" or "coupled" to another element, it can be directly connected or coupled to the other element or intervening elements may be present. By contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is only intended to describe particular representative embodiments and is not intended to be limiting of the present technology. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The functions of the various elements shown in the figures, including any functional block labeled as a "processor," may be provided through the use of dedicated hardware as well as hardware capable of executing software. When provided by a processor, the functions may be provided by a single dedicated processor, by a single shared processor, or by a plurality of individual processors, some of which may be shared. In some implementations of the present technology, the processor may be a general-purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, an application-specific integrated circuit (ASIC), a field-programmable gate array (FPGA), a read-only memory (ROM) for storing software, a random-access memory (RAM), and non-volatile storage. Other hardware, conventional and/or custom, may also be included.

Software modules, or simply modules or units which are implied to be software, may be represented herein as any combination of flowchart elements or other elements indicating the performance of process steps and/or textual description. Such modules may be executed by hardware that is expressly or implicitly shown. Moreover, it should be understood that a module may include, for example, but without limitation, computer program logic, computer program instructions, software, stack, firmware, hardware circuitry, or a combination thereof, which provides the required capabilities.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

The present technology may be implemented as a system, a method, and/or a computer program product. The computer program product may include a computer-readable storage medium (or media) storing computer-readable program instructions that, when executed by a processor, cause the processor to carry out aspects of the disclosed technology. The computer-readable storage medium may be, for example, an electronic storage device, a magnetic storage device, an optical storage device, an electromagnetic storage device, a semiconductor storage device, or any suitable combination of these. A non-exhaustive list of more specific examples of the computer-readable storage medium includes: a portable computer disk, a hard disk, a random-access memory (RAM), a read-only memory (ROM), a flash memory, an optical disk, a memory stick, a floppy disk, a mechanically or visually encoded medium (e.g., a punch card or bar code), and/or any combination of these. A computer-readable storage medium, as used herein, is to be construed as being a non-transitory computer-readable medium. It is not to be construed as being a transitory signal, such as radio waves or other freely propagating electromagnetic waves, electromagnetic waves propagating through a waveguide or other transmission media *(e.g.,* light pulses passing through a fiber-optic cable), or electrical signals transmitted through a wire.

It will be understood that computer-readable program instructions can be downloaded to respective computing or processing devices from a computer-readable storage medium or to an external computer or external storage device via a network, for example, the Internet, a local area network, a wide area network and/or a wireless network. A network interface in a computing/processing device may receive computer-readable program instructions via the network and forward the computer-readable program instructions for storage in a computer-readable storage medium within the respective computing or processing device.

Computer-readable program instructions for carrying out operations of the present disclosure may be assembler instructions, machine instructions, firmware instructions, configuration data for integrated circuitry, or either source code or object code written in any combination of one or more programming languages. The computer-readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network.

All statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable program instructions. These computer-readable program instructions may be provided to a processor or other programmable data processing apparatus to generate a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowcharts, flow diagrams, state transition diagrams, pseudo-code, and the like.

The computer-readable program instructions may also be loaded onto a computer, other programmable data processing apparatus or other devices to cause a series of operational steps to be performed on the computer, other programmable apparatus or other devices to generate a computer-implemented process, such that the instructions which execute on the computer, other programmable apparatus, or other device implement the functions/acts specified in the flowcharts, flow diagrams, state transition diagrams, pseudo-code, and the like.

In some alternative implementations, the functions noted in flowcharts, flow diagrams, state transition diagrams, pseudo-code, and the like may occur out of the order noted in the figures. For example, two blocks shown in succession in a flowchart may, in fact, be executed substantially concurrently, or the blocks may sometimes be executed in the reverse order, depending upon the functionality involved. It will also be noted that each of the functions noted in the figures, and combinations of such functions can be implemented by special-purpose hardware-based systems that perform the specified functions or acts or by combinations of special-purpose hardware and computer instructions.

With these fundamentals in place, we will now consider some non-limiting examples to illustrate various implementations of aspects of the present disclosure.

### Computer system

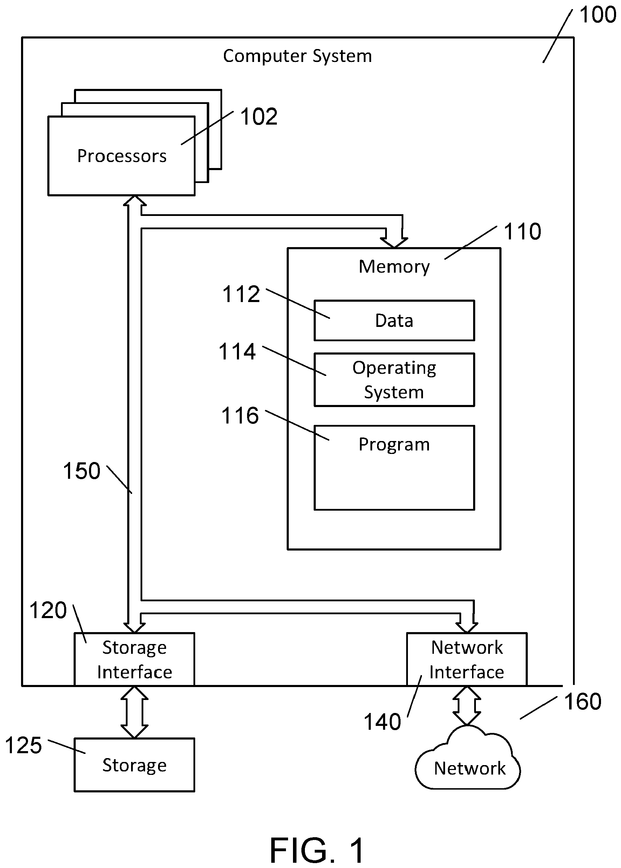

FIG. 1 shows a computer system 100. The computer system 100 may be a multiuser computer, a single user computer, a laptop computer, a tablet computer, a smartphone, an embedded control system, or any other computer system currently known or later developed. Additionally, it will be recognized that some or all the components of the computer system 100 may be virtualized. As shown in FIG. 1, the computer system 100 includes one or more processors 102, a memory 110, a storage interface 120, and a network interface 140. These system components are interconnected via a bus 150, which may include one or more internal and/or external buses (not shown) (e.g. a PCI bus, universal serial bus, IEEE 1394 "Firewire" bus, SCSI bus, Serial-ATA bus, etc.), to which the various hardware components are electronically coupled.

The memory 110, which may be a random-access memory or any other type of memory, may contain data 112, an operating system 114, and a program 116. The data 112 may be any data that serves as input to or output from any program in the computer system 100. The operating system 114 is an operating system such as MICROSOFT WINDOWS or LINUX. The program 116 may be any program or set of programs that include programmed instructions that may be executed by the processor to control actions taken by the computer system 100.

The storage interface 120 is used to connect storage devices, such as the storage device 125, to the computer system 100. One type of storage device 125 is a solid-state drive, which may use an integrated circuit assembly to store data persistently. A different kind of storage device 125 is a hard drive, such as an electro-mechanical device that uses magnetic storage to store and retrieve digital data. Similarly, the storage device 125 may be an optical drive, a card reader that receives a removable memory card, such as an SD card, or a flash memory device that may be connected to the computer system 100 through, *e.g.,* a universal serial bus (USB).

In some implementations, the computer system 100 may use well-known virtual memory techniques that allow the programs of the computer system 100 to behave as if they have access to a large, contiguous address space instead of access to multiple, smaller storage spaces, such as the memory 110 and the storage device 125. Therefore, while the data 112, the operating system 114, and the programs 116 are shown to reside in the memory 110, those skilled in the art will recognize that these items are not necessarily wholly contained in the memory 110 at the same time.

The processors 102 may include one or more microprocessors and/or other integrated circuits. The processors 102 execute program instructions stored in the memory 110. When the computer system 100 starts up, the processors 102 may initially execute a boot routine and/or the program instructions that make up the operating system 114.

The network interface 140 is used to connect the computer system 100 to other computer systems or networked devices (not shown) via a network 160. The network interface 140 may include a combination of hardware and software that allows communicating on the network 160. In some implementations, the network interface 140 may be a wireless network interface. The software in the network interface 140 may include software that uses one or more network protocols to communicate over the network 160. For example, the network protocols may include TCP/IP (Transmission Control Protocol/Internet Protocol).

It will be understood that the computer system 100 is merely an example and that the disclosed technology may be used with computer systems or other computing devices having different configurations.

### Self-Driving Vehicle

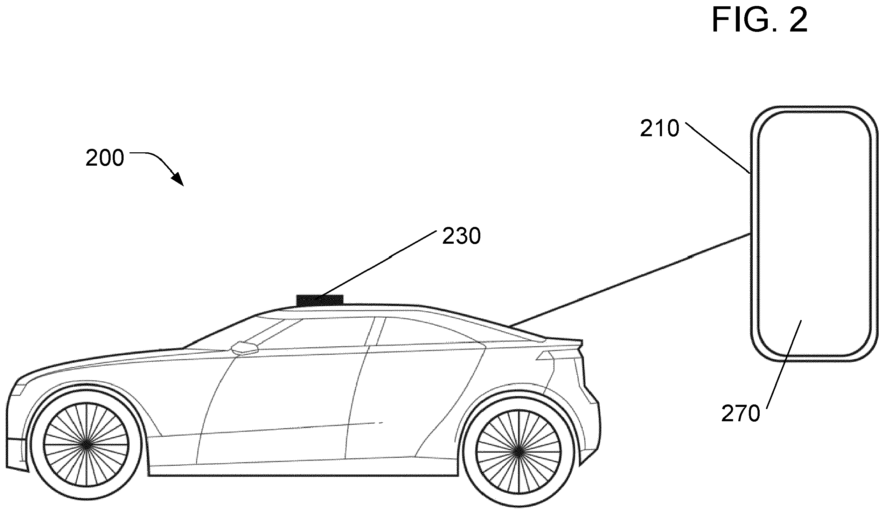

FIG. 2 shows a self-driving vehicle 200. The self-driving vehicle 200 is depicted as being a passenger car, but it will be understood that it may include other leisure or transportation vehicles, such as any variety of private or commercial car, truck, motorbike or the like. Although the self-driving vehicle 200 is depicted as being a land vehicle, the present technology may be used in any self-driving or semi-automated vehicle that may use information on a road plane or horizon line in its automated operation. For example, the self-driving vehicle 200 may be an aircraft that uses horizon line or road surface information, *e.g.*, for automated take off and landing.

The self-driving vehicle 200 may be a fully self-driving vehicle, or a partially autonomous vehicle, in which a human driver controls some aspects of the vehicle's operation, while other aspects (e.g., "autopilot" on highways) are automated. It should be noted that the vehicle may have any manufacturer, vehicle model, vehicle year of manufacture, vehicle weight, vehicle dimensions, vehicle weight distribution, vehicle surface area, vehicle height, drive train type (e.g. 2x or 4x), tire type, brake system, fuel system, mileage, vehicle identification number, engine size, or other characteristics or parameters of a vehicle.

The self-driving vehicle 200 includes an computing device 210 that controls at least some aspects of the operation of the self-driving vehicle 200. The implementation of the computing device 210 is not particularly limited, but as an example, the computing device 210 may be implemented as a vehicle engine control unit, a vehicle CPU, a vehicle navigation device, a tablet, a personal computer built into the self-driving vehicle 200 and the like. Thus, it should be noted that the computing device 210 may or may not be permanently associated with the self-driving vehicle 200. Additionally or alternatively, the computing device 210 can be implemented in a wireless communication device such as a mobile telephone (e.g. a smartphone or a radio-phone). In certain implementations, the computing device 210 has a display 270.

The computing device 210 may includes some or all of the components of a computer system 100 as depicted in FIG. 1. Generally, the computing device 210 comprises hardware and/or software and/or firmware, or a combination thereof, for processing data as will be described in greater detail below. It should be noted that the computing device 210 may communicate with other computer systems (not shown) over a network (not shown), including servers and computer systems on other self-driving vehicles (e.g., in a peer-to-peer or self organizing mesh network configuration). This communication, however, should not be required for operation of the self-driving vehicle 200, since there may be situations in which the self-driving vehicle 200 may be outside of the communication range of a wireless or cellular network, or otherwise unable to communicate over a network.

The self-driving vehicle 200 also includes an imaging sensor 230, configured to capture one or more digital images of at least a portion of a surrounding area of the self-driving vehicle 200. The imaging sensor 230 is communicatively coupled to the computing device 210 for transmitting the captured images to the computing device 210 for processing, as will be described in greater detail below.

In some implementations, the imaging sensor 230 may include a camera. For example, in one specific implementation of the present technology, the camera may be a grayscale digital camera with resolution sufficient to detect objects at a predetermined distance of about 100m or more (although cameras with other characteristics, resolutions, and ranges are within the scope of the present disclosure).

The imaging sensor 230 can be mounted on an interior, upper portion of a windshield of the self-driving vehicle 200, but other locations are within the scope of the present disclosure, including on a front hood, rooftop, front grill, or front bumper of the self-driving vehicle 200. In some implementations of the present technology, the imaging sensor 230 may be mounted in a dedicated enclosure (not shown) mounted on the top of the self-driving vehicle 200. In some implementations of the present technology, the imaging sensor 230 can be implemented as a plurality of cameras. For example, the plurality of cameras may have a sufficient number of cameras to capture a surrounding or panoramic digital image of the area surrounding the self-driving vehicle 200.

In some implementations of the present technology, the camera (or one or more cameras that are included in the imaging sensor 230) may be configured to capture a predetermined portion of the surrounding area around the self-driving vehicle 200. For example, in some implementations of the present technology, the camera is configured to capture a digital image (or a series of digital images) that represent approximately 90 degrees of the surrounding area around the self-driving vehicle 200 that are along a movement path of the self-driving vehicle 200. It will be understood that other configurations, such as cameras that capture approximately 180 degrees or full panoramic images could also be used.

It should be noted that additional sensors may be used in some implementations of the present technology. The self-driving vehicle 200 is depicted in FIG. 2 for the sake of simplicity as having only the imaging sensor 230, however in other implementations, the self-driving vehicle 200 may include additional sensors without departing from the scope of the present technology.

### Generating a Machine Learning Model

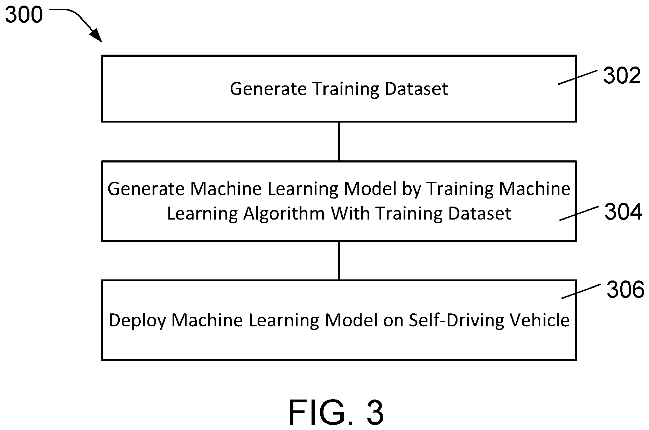

Referring now to FIG. 3, a flowchart 300 for a generalized method for producing a machine learning model for use in a self-driving vehicle to predict a plane of a road based on an image is described. In block 302, a computing device, such as the computer system 100 described above with reference to FIG. 1, is used to generate a training dataset for use in training a machine learning algorithm. In general, this training dataset can be generated automatically from data collected by operating a training vehicle on training roads. Two methods for generating the training dataset are described in detail below, in sections labeled "First Method for Generating a Training Dataset" and "Second Method for Generating a Training Dataset."

It should be noted that the training vehicle need not be self-driving. While a self-driving vehicle may be used as the training vehicle, the training vehicle could also have a human driver or could be controlled remotely. The training roads can be any roads that are reasonably representative of the types of roads on which the self-driving vehicle may operate.

The data collected by the training vehicle may be collected prior to generating the training dataset, and stored, *e.g.,* in a database. The data may include image data, data on time and location of data collection, as well as extensive data from other sensors, such as a LiDAR system. While the training vehicle may include numerous complex and/or expensive sensor systems, the technology described herein is intended to train machine learning algorithms to make determinations based on image data from a camera. Therefore, once trained, the machine learning algorithms of the present technology may be used on a self-driving vehicle that includes a camera, but need not include the same set of sensors that are used by the training vehicle for collection of data.

In some implementations, the generated training dataset may be stored in a database, which may be used to train a machine learning algorithm. As will be understood by a person having ordinary skill in the art, there are many conventional ways in which the generated training dataset may be represented and stored.

In block 304, the generated training dataset is provided to a machine learning algorithm operating on a computing device to train the machine learning algorithm. This generates a "machine learning model" which includes, *e.g.,* the set of weights and/or other data that represent and/or define the trained machine learning algorithm. This machine learning model may be deployed on other systems that run an appropriate machine learning algorithm to use the results of the training without the need to retrain the algorithm.

The machine learning algorithm may be trained using the entire generated training dataset, or a subset of the generated training dataset. In some implementations, a portion of the generated training dataset may be used to train the machine learning algorithm *(e.g.,* 2/3 of the training dataset, selected at random), and part of the training dataset *(e.g.,* the remaining 1/3 of the training dataset) may be used to evaluate the performance of the trained machine learning algorithm before the trained algorithm is deployed in a self-driving vehicle.

It will further be understood that the computing device that is used to train the machine learning algorithm may be the same computing device that was used to generate the training dataset, or may be a different computing device. In some implementations, the computing device that is used to train the machine learning algorithm may include specialized hardware, such as one or more dedicated tensor processors or other specialized processing units that are designed to accelerate operations that are typically used in machine learning algorithms.

The machine learning algorithm that is being trained may be any suitable conventional machine learning algorithm. For example, the machine learning algorithm may be a neural network that is configured to accept image data as input, and to output parameters defining a road plane and/or horizon line in the image. In particular, it is contemplated that a conventional "convolutional neural network," trained using a training dataset generated in accordance with the disclosed technology, may be used to determine a road plane or horizon line in an image. Convolutional neural networks, which are often used in machine vision applications, are multilayered neural networks that are designed to have an input layer and an output layer, and numerous hidden layers that can include (depending on a specific implementation of the convolutional neural network) convolutional layers, pooling layers, fully-connected layers, and normalization layers, for example. Neural network algorithms involving multiple hidden layers of artificial neurons, such as convolutional neural networks, may be referred to as "deep neural networks" or (more generally) "deep learning" algorithms.

While a conventional convolutional neural network may be trained using a training dataset generated in accordance with the disclosed technology, the disclosed methods may be adapted for use with a variety of conventional machine learning algorithms. This includes, without limitation, other "deep learning" algorithms, or other machine learning algorithms, such as other types of neural networks or "connectionist" systems, decision trees, decision forests, Bayesian networks, or other known or later developed machine learning algorithms that use training datasets (e.g., supervised or semi-supervised learning algorithms).

In block 306, the machine learning model that was generated by training the machine learning algorithm using the training dataset is deployed on a self-driving vehicle to determine the road plane and/or horizon line based on image data provided by a camera.

### First Method for Generating a Training Dataset

In a first implementation of a method for generating a training dataset, the training dataset is built using data collected by a training vehicle, which may be operated by a human operator, either in the training vehicle or remotely, or may be a self-driving vehicle. The training vehicle is equipped with a camera or other imaging device, as well as a sensor, such as a LiDAR or other sensor capable of providing a stream of odometry data. In general, the method generates training data based on images of the road ahead of the vehicle, combined with actual road orientation data taken at a later time, such as when the vehicle is on the road 100m ahead of where the image was taken.

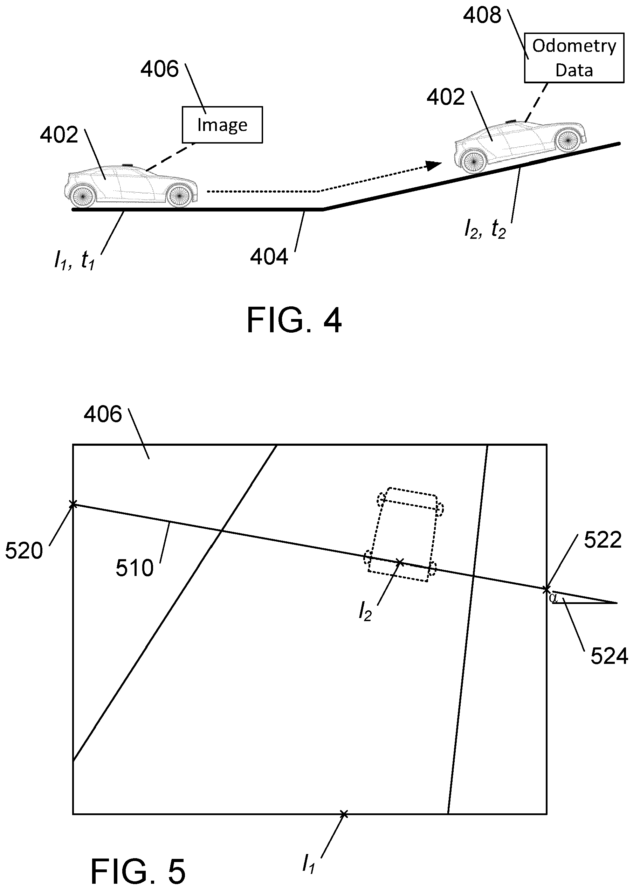

For example, as shown in FIG. 4, data are collected from operation of a training vehicle 402 on a road 404. The data include an image 406 of the road 404 taken by the training vehicle 402 at a time *t₁* when the training vehicle is at a location *l₁* on the road 404 and odometry data 408 taken by the training vehicle at a time *t₂* when the training vehicle is at a location *l₂* on the road 404. In some implementations, the location *l₁* may be a predetermined distance from the location *l₂*, such as 100m, though other distances may also be used. In some implementations, other measures, such as data on the velocity of the training vehicle 402, and time (i.e., a difference between *t₁* and *t₂*) may be used to determine which odometry data 408 to use with a particular image 406.

The odometry data 408 at location *l₂* is used to determine the orientation of the training vehicle 402 at the location *l₂*. The odometry data 408 generally provides an inclination of the training vehicle 402 in all axes with the center at the location (e.g., along an x, y, and z axis) *l₂*. In some implementations, the orientation of a rear axle (not shown) of the training vehicle 402 may be used as an indicator of vehicle orientation, and the coordinates used may be centered, *e.g.,* on a middle point of the rear axle of the training vehicle 402. In such implementations, the plane of the road may be calculated based on a known height of the rear axle, and it will be understood that a vector that is perpendicular to the rear axle in a "downward" direction (with respect to the rear axle will also be perpendicular to the surface of the road. Advantageously, the odometry data 408 provides a substantially exact orientation at location *l₂*, so there is no need to, e.g., estimate or average.

The odometry data 408 may be collected by any sensor (not shown) on the training vehicle 402 that is capable of determining an orientation of the training vehicle 402. In some embodiments, the sensor may include a LiDAR system (not shown), and the orientation of the training vehicle 402 may be determined from a LiDAR point cloud using a conventional method, such as a conventional iterative closest point algorithm applied to sequential LiDAR point clouds.

Once the image 406 for the training vehicle 402 at the location /*₁* and the orientation data at the location *l₂* are determined, a line (not shown) is determined in the image that represents the plane of the road at the location *l₂*. This may be done, for example, by mapping two pixels in the image 406 that correspond to two points belonging to a rear axle of the training vehicle 402 when the training vehicle 402 is at the location *l₂*. In implementations using a LiDAR on the training vehicle 402, the LiDAR and the camera that takes the images may be calibrated, to facilitate this mapping. Once these two pixels are mapped, a line between them may be generated to represent the plane of the road in the image, and the image and line representing the plane of the road may be added to the training dataset.

This training dataset may then be used to train a machine learning algorithm to determine a set of parameters from the image, in which the parameters unambiguously represent a future plane of the road. In some implementations the parameters may represent a future plane of the road at a predetermined distance (e.g., 100m).

As shown in FIG. 5, in various implementations, the parameters generated by the machine learning algorithm may be parameters such as points in an image, intercepts with edges of an image, a slope and an intercept, an angle and an intercept, or any other parameters that represent a line 510 in an image that unambiguously represents the plane of the road. In FIG. 5, which represents the image 406 taken at location /*₁*, intercepts 520 and 522 of the line 510 with edges of the image 406 are shown as examples of the parameters that may be determined by a machine learning algorithm. The angle α 524 is also shown as an example of such a parameter. With the example parameters shown in FIG. 5, any two of these parameters may be used to define the line 510. The location of the line on the vertical axis indicates the gradient of the plane of the road, while the ratio of the intercepts 520 and 522, or the angle α 524 indicate the angle of inclination of the plane of the road. It should be noted that although a vehicle is shown in FIG. 5, this is merely for illustration of the line 510 aligning with a rear axle of the vehicle at location *l₂*. The vehicle will, of course, not be in the image 406 taken by the vehicle at location *l₁*.

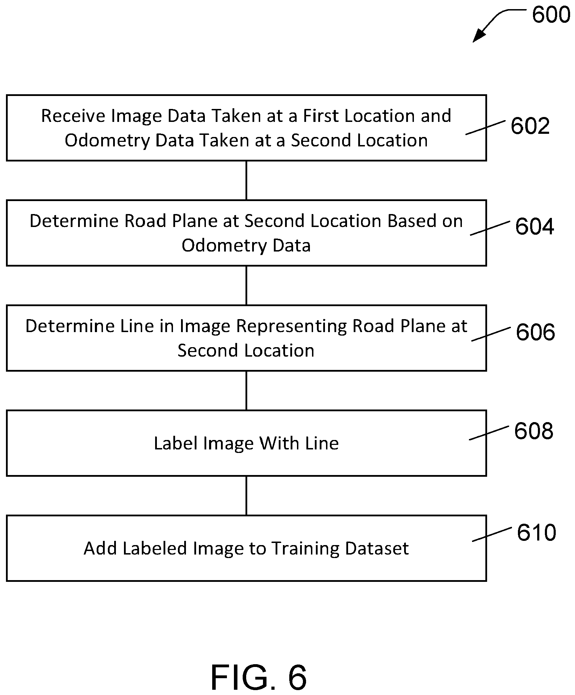

FIG. 6 shows a flowchart of one implementation of a method 600 for generating a training dataset for a machine learning model for use in a self-driving vehicle to predict a plane of a road based on an image. In block 602, the method receives data collected from operation of a training vehicle on a road. The data includes an image associated with a first location of the training vehicle on the road, and odometry data associated with a second location of the training vehicle on the road. The image shows a portion of the road associated with the second location of the training vehicle.

In some implementations, the training vehicle is at the first location during a first instant in time and at the second location during a second instant in time that is later than the first instant in time. It will, however, be noted that this need not always be the case when generating the training dataset. In some implementations, the image may be taken at a time that is after the odometry data, or the image and odometry data may be taken by different training vehicles or by the same training vehicle during two different trips along the road.

In some implementations, the first location may be a predetermined distance from the second location, either along a direct path *(e.g.,* a straight line), or along the road or other operating path of the training vehicle. Some implementations may use different methods to determine the first location and second location, such as methods based on time, velocity, or other measurements. Generally, the methods described herein may be used to provide training datasets in which the second location is visible in the image taken at the first location.

The odometry data may be collected by any sensor that is capable of determining an orientation of the training vehicle. In some implementations, the sensor may include a LiDAR system, and the orientation of the training vehicle may be determined from data provided by the LiDAR system. For example, the orientation may be determined from a LiDAR point cloud using a conventional method, well-understood by those of ordinary skill in the art, such as an iterative closest point algorithm applied to sequential LiDAR point clouds.

Advantageously, although LiDAR systems are relatively expensive, the LiDAR system is on the training vehicle, which is used to generate the training dataset for a machine learning algorithm. Once the machine learning algorithm is trained, it may be used on many vehicles that have only a camera, without requiring a LiDAR system. It should also be noted that the method 500 is usable even with a sparse LiDAR cloud, such as may be provided by a LiDAR system that is partially dirty from road use.

In block 604, the method determines a road plane at the second location based on the odometry data. In some implementations, the odometry data includes an inclination of the training vehicle in all axes. In some implementations, the orientation of a rear axle of the training vehicle may be used as an indicator of vehicle orientation, and the coordinates used may be centered on a middle point of the rear axle of the training vehicle. In some implementations, the plane of the road may be calculated based on a known height of the rear axle. This is based, in part, on a vector that is perpendicular to the rear axle in a "downward" direction also being perpendicular to the surface of the road. It will be understood that other portions of the training vehicle, such as a "center" of the vehicle, a front axle, or other coordinates related to the position of the training vehicle could also be used to determine the location and orientation of the training vehicle at the second location.

In block 606, the method determines a line in the image that represents the road plane at the second location. This is done based on the road plane determined in block 604, and mapping at least two points on the road plane at the second location onto positions (such as pixels) in the image taken at the first location. In some implementations, this may be done by mapping two pixels in the image that correspond to two points belonging to a rear axle, a front axle, or other known location of the training vehicle when the training vehicle is at the second location. In implementations using a LiDAR on the training vehicle, for example, the LiDAR and the camera that takes the images may be calibrated, to facilitate this mapping. Once these two pixels are mapped, a line between them may be generated to represent the plane of the road in the image.

In block 608, the image is labeled with the line representing the plane of the road to generate a training example. In some implementations, this "labeling" may be done by adding information on the line to a data structure including the image data and the line information. In some implementations, the line may actually be marked or drawn in the image.

In block 610, the training example is added to the training dataset. Entries in the training dataset include both the image, and the "correct" or desired result (i.e., the ground truth used for labeling the training example) in the form of the line in the image representing the plane of the road at some known location with respect to the position of the vehicle at which the image was taken. Adding the training example to the training dataset may be done, for example, by adding the training example to a database of training examples for training a self-driving vehicle to predict a plane of a road based on an image. This database, or at least subsets of data from this database may then be used to train a machine learning algorithm.

### Second Method for Generating a Training Dataset

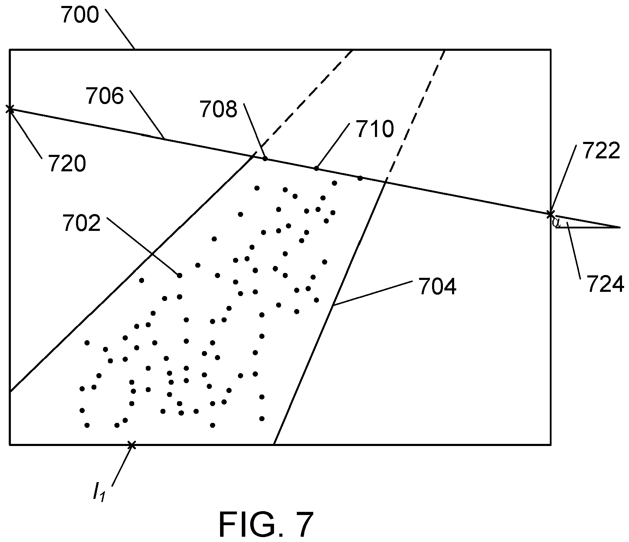

A second method for generating a training dataset is based generally on using knowledge about the plane of the road determined based on LiDAR data points as ground truth for labeling an associated camera image with a line unambiguously representing the plane of the road. This method is illustrated in FIG. 7, which generally shows an image 700 as taken by a camera (not shown) on a self-driving vehicle (not shown), along with other markings to illustrate the second method.

The second method for generating a training dataset involves receiving a LiDAR cloud of data points 702 associated with a training vehicle at a location *l₁* on a road 704. The received data points 702 are spread within a field-of-view range of the LiDAR system (not shown) that is generating the data points 702. For example, the range of a LiDAR system used for this application may be approximately 100m, so the LiDAR cloud would represent points within approximately 100m of the location *l₁*.

A plane of the road is determined based on the data points 702 belonging to the surface of the road 704 within the field-of-view. This may be done using a conventional method, such as the well-known RANSAC (Random Sample Consensus) algorithm. RANSAC is a well-known iterative algorithm for removing or eliminating the influence of outliers on collected data. Implementation of RANSAC is well within the knowledge of one of ordinary skill in the art, and many implementations of RANSAC in a variety of programming languages are available for download. It will be understood that the determined plane of the road using this method is not the actual plane of the road, but rather an averaged plane associated with a portion of the road starting from the location /*₁* and limited by the field-of-view of the LiDAR system. This serves as a reasonable proxy for the future plane of the road. This averaged plane is updated upon receiving a new LiDAR cloud of data points. Additionally, it should be noted that although the method is described in terms of cloud of data points generated by a LiDAR system, other sensors, such as RADAR, that generate similar 3D point maps over a known range could be used.

In addition to the LiDAR data, an image 700 from the camera mounted on the training vehicle is captured at the location *l₁*. A line 706, which unambiguously represents the plane of the road on the image is then determined and the image 700 is labeled with the line 706. In some implementations, the line 706 may be determined using at least two LiDAR points 708 and 710 belonging to the determined plane of the road at approximately a predetermined distance *(e.g.,* 100m) from the location *l₁*. The predetermined distance should be relatively far from the image point of view to emulate a horizon line, which is a line to which all the planes parallel to the road converge at infinity. Once the at least two LiDAR points 708 and 710 belonging to the plane of the road have been selected, the method finds two pixels in the image 700 corresponding to two of the LiDAR points 708 and 710, and determines the line 706 based on these two pixels. In some implementations, finding the two pixels in the image that correspond to the LiDAR points is facilitated by the LiDAR and camera being calibrated.

Once the image 700 is labeled with the line 706, it may be added to the training dataset. When the training dataset contains a sufficient number of training examples (e.g., a predetermined number of training examples, depending on the machine learning algorithm being used), it may then be used to train a machine learning algorithm to determine a set of parameters from the image, in which the parameters unambiguously represent a future plane of the road. In some implementations the parameters may represent a future plane of the road at a predetermined distance (e.g., 100m). In various implementations, the parameters generated by the machine learning algorithm may be parameters such as points in the an image, intercepts with edges of an image, a slope and an intercept, an angle and an intercept, or any other parameters that represent a line in an image that unambiguously represents the plane of the road. In FIG. 7, intercepts 720 and 722 of the line 706 with edges of the image 700 are shown as examples of the parameters that may be determined by a machine learning algorithm. The angle α 724 is also shown as an example of such a parameter. With the example parameters shown in FIG. 7, any two of these parameters may be used to define the line 706. The location of the line on the vertical axis indicates the gradient of the plane of the road, while the ratio of the intercepts 720 and 722, or the angle α 724 indicate the angle of inclination of the plane of the road.

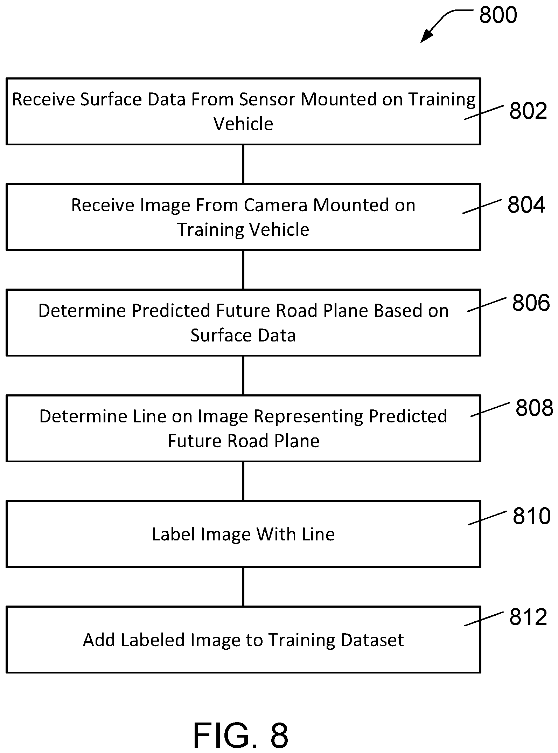

FIG. 8 shows a flowchart 800 of one implementation of this second method for generating a training dataset for a machine learning model for use in a self-driving vehicle to predict a plane of a road based on an image. In block 802, the method receives surface data from a sensor mounted on a training vehicle. The senor may, for example, be a LiDAR system or other sensor producing a 3D point map over a range. The surface data are associated with a segment of a surrounding environment including a road within a predetermined distance, such as approximately 100m, from the training vehicle. In implementations that use a LiDAR, the surface data is a set of LiDAR data points in which a subset of the LiDAR data points belong to a surface of the road.

In block 804, the method receives a training image from a camera mounted on the training vehicle. The training image is taken at approximately the same position of the training vehicle on the training road as the surface data and shows at least the segment of the surrounding environment including the training road.

In block 806, the method determines a predicted future plane of the road based on the surface data. In some implementations, this may be done using a conventional algorithm, such as a RANSAC (Random Sample Consensus) algorithm. It should be noted that the determined plane of the road using this method is not the actual plane of the road, but rather an averaged plane associated with a portion of the road starting from the location of the self-driving vehicle at which the image was taken and limited by the field-of-view of the sensor, or a closer predetermined distance (e.g., approximately 100m).

In block 808, the method determines a line representing the predicted future plane of the road on the image. In some implementations, this line may be determined using at least two points from the surface data corresponding to the determined plane of the road at approximately a predetermined distance (e.g., 100m) from the location of the self-driving vehicle. The predetermined distance should be relatively far from the image point of view to emulate a horizon line, which is a line to which all the planes parallel to the road converge at infinity. Once the at least two points belonging to the plane of the road have been selected, the method finds two pixels in the training image corresponding to two points from the surface data, and determines the line based on these two pixels.

In block 810, the training image is labeled with the line representing the plane of the road to generate a training example. In some implementations, this "labeling" may be done by adding information on the line to a data structure including the training image data and the line information. In some implementations, the line may actually be marked or drawn in the training image. This will be determined, at least in part, on the learning algorithm that will be trained using the training dataset.

In block 812, the training example is added to the training dataset. Entries in the training dataset include both the image, and the "correct" or desired result in the form of the line in the image representing the plane of the road at some known location with respect to the position of the vehicle at which the image was taken. Adding the training example to the training dataset may be done, for example, by adding the training example to a database of training examples for training a self-driving vehicle to predict a plane of a road based on an image. This database, or at least subsets of data from this database may then be used to train a machine learning algorithm.

### Method of Operating the Vehicle

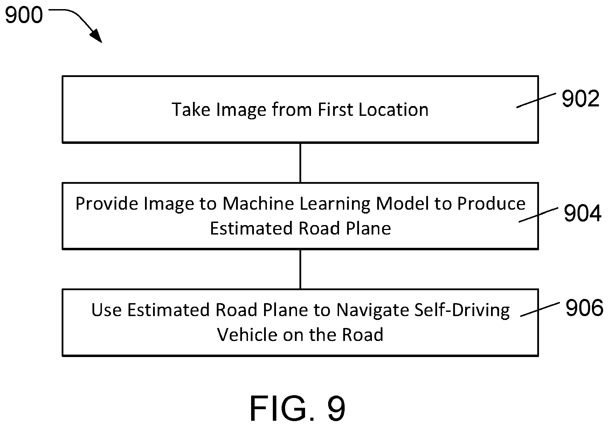

Referring now to FIG. 9, a method for operating a self-driving vehicle is described. The self-driving vehicle may be, for example, the self-driving vehicle 200 described above with reference to FIG. 2, including the computing device 210 and the imaging sensor 230. In accordance with the present technology, a machine learning model, generated according to the method described above with reference to FIG. 3, and trained using a training dataset generated as described above, is loaded into the computing device 210 on the self-driving vehicle, and an appropriate machine learning algorithm (i.e., a machine learning algorithm that is able to use the trained machine learning model) proceeds to use the machine learning model to estimate the road plane and/or horizon line based on using images from the imaging sensor 230 used as input.

This process is illustrated in the flowchart 900 of FIG. 9. In block 802, an image is taken from a first location of the self-driving vehicle using a camera. The image shows a portion of a road on which the self-driving vehicle is operating, including a segment of a surrounding environment including the road within a predetermined distance (e.g., approximately 100m) from the self-driving vehicle.

In block 904, the image is provided to a machine learning model used with a machine learning algorithm operating on a computing device in the self-driving vehicle. The machine learning model generates output that estimates a road plane based on the image. In some implementations, the output is in the form of parameters that describe a line that unambiguously defines a road plane, as described above.

It will be understood that in accordance with the present technology, the machine learning model used to estimate the road plane is the result of training a machine learning algorithm using the training dataset generated according to one of the methods described above with reference to FIGS 4-8.

In block 906, the estimated road plane is used to navigate the self-driving vehicle on the road. In some implementations, the estimated road plane may be used to create a birds-eye view projection of the road scene ahead of the self-driving vehicle. This birds-eye view is then used in other calculations and modules to operate the self-driving vehicle.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A method for generating a machine learning model for use in a self-driving vehicle (200) to predict a plane of a road (404) based on an image (406), the method comprising:
generating (302) a training dataset on a computing device (100, 210) by:
receiving (602) data collected from operation of a training vehicle (402) on a road (404) , the data including an image (406) associated with a first location (*l₁*) of the training vehicle (402) on the road (404), and odometry data (408) associated with a second location (*l₂*) of the training vehicle (402) on the road (404), the image (406) showing a portion of the road (404) associated with the second location (*l₂*) of the training vehicle (402);
determining (604) a road plane at the second location (*l₂*) of the training vehicle (402) based on the odometry data (408);
determining (606) a line (510) in the image (406) representing the road plane at the second location (*l₂*) of the training vehicle (402);
labeling (608) the image (406) with the line (510) to generate a training example; and
adding (610) the training example to the training dataset;
providing the training dataset to a machine learning algorithm operating on the computing device (100, 210) to generate (304) a machine learning model for use in the self-driving vehicle (200); and
determining (904) a new road plane based on a new incoming camera image using the machine learning model.

2. The method of claim 1, wherein the training vehicle (402) is operated at the first location (/*₁*) during a first instant in time (*t₁*), and at the second location (*l₂*) during a second instant in time (*t₂*) that is later than the first instant in time (t*₁*).

3. The method of claim 1 or claim 2, wherein the second location (*l₂*) is ahead of the first location (*l₁*) along an operating path of the training vehicle (402) on the road (404), and wherein there is a predetermined distance between the first location (*l₁*) and the second location (*l₂*).

4. The method of any one of the preceding claims, wherein the odometry data (408) is based on LiDAR data of the second location (/*₂*).

5. The method of claim 4, wherein the LiDAR data are sparse.

6. The method of any one of the preceding claims, wherein the line (510) is determined based on a set of image points, at least two image points in the set of image points corresponding to positions along one of a rear axle or a front axle of the training vehicle (402) at the second location (*l₂*).

7. The method of any one of the preceding claims, wherein the machine learning algorithm comprises a convolutional neural network, and the machine learning model defines the convolutional neural network.

8. The method of any one of the preceding claims, wherein labeling (608) the image (406) with the line (510) comprises marking the line (510) on the image (406).

9. A method of operating a self-driving vehicle (200) using a machine learning model trained according to any one of the preceding claims, comprising:
taking (902) an image from a first location of the self-driving vehicle (200) using an electronic camera (230), the image showing a portion of a road on which the self-driving vehicle (200) is operating, including a second location that is ahead of the first location on the road;
providing (904) the image to the machine learning model operating on a computing device (210), the machine learning model determining an estimated road plane based on the image; and
using (906) the estimated road plane to operate the self-driving vehicle (200) on the road.

10. A self-driving vehicle (200) operated according to the method of claim 9, the self-driving vehicle (200) comprising:
an electronic camera (230) configured to take an image from a first location of the self-driving vehicle (200), showing a portion of a road on which the self-driving vehicle (200) is operating, including a second location that is ahead of the first location on the road;
a computing device (210) including a processor (102) and a memory (110), the memory storing programmed instructions that when executed by the processor cause the computing device to:
provide the image to the machine learning model, the machine learning model determining an estimated road plane based on the image; and
operate the self-driving vehicle (200) on the road, based at least in part on the estimated road plane.
